# EUROPÄISCHE PATENTSCHRIFT

(11) **EP 2 578 517 B1**
(45) Veröffentlichungstag und Bekanntmachung des Hinweises auf die Patenterteilung: **12.03.2014**
(21) Anmeldenummer: 12175573.0
(22) Anmeldetag: 09.07.2012
(51) Int. Cl.: B65F 1/10, B65F 1/12, B65F 1/14

(54) **Transportsicherung eines Sammelbehälters eines Entsorgungssystems**
Transport fixture of a collection container of a disposal system
Sécurité de transport d'un récipient de collecte d'un système d'évacuation

(30) Priorität: 06.10.2011 CH 16352011
(43) Veröffentlichungstag der Anmeldung: 10.04.2013
(73) Patentinhaber: HUBTECH AG, 8117 Fällanden (CH)
(72) Erfinder: Huber, Hans Jörg, 8117 Fällanden (CH)
(74) Vertreter: Feldmann, Clarence Paul

(56) Entgegenhaltungen:
- EP-B1- 1 476 376
- DE-A1-102008 028 068
- US-A- 3 141 609

## Beschreibung

### Technisches Gebiet

Die vorliegende Erfindung beschreibt einen Sammelbehälter eines Aktenentsorgungssystems, umfassend einen Sammelraum mit einer in Entleerungsrichtung geneigt verlaufenden Bodenplatte, eine verschwenkbare Auswurfklappe zur Entleerung von Akten aus dem Sammelraum und einen elektromagnetisch betätigbaren Verschlussmechanismus mit einem Zapfen, welcher mit einer an der Auswurfklappe angeordneten Haltevorrichtung wirkverbindbar ist.

### Stand der Technik

Entsorgungssysteme, welche das Sammeln, Transportieren und spätere Entsorgen von vertraulichen Akten ermöglichen sind schon seit längerem bekannt. In verschiedenen sensibilisierten Betrieben werden die Akten und anderen Datenträger zentral gesammelt und "kontrolliert" vernichtet, geshreddert und recycliert oder verbrannt. Für dieses Sammeln werden meist besonders gekennzeichnete Behälter verwendet.

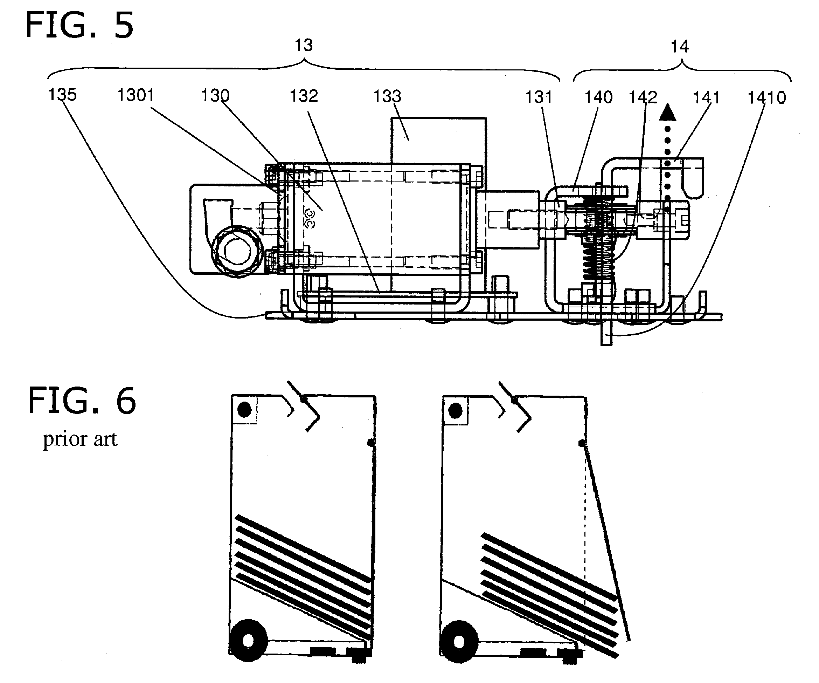

In der EP1476376 wird ein derartiges Entsorgungssystem beschrieben, welches es erlaubt, Akten in bewegbaren und gesicherten Sammelbehältern zu Sammeln, zu Transportieren und später in einem Entsorgungscontainer zu entsorgen. Durch einen Einwurf am Sammelbehälter können Akten aus unterschiedlichem Papier, Pappe oder Karton in einen Sammelraum des Sammelbehälters gesichert eingebracht werden. Zur späteren Entleerung weist der Sammelbehälter eine Auswurfklappe auf, welche von einem elektromagnetisch betriebenen Verschlussmechanismus öffenbar ist. Durch die Verwendung eines elektromagnetisch gesichert gesteuerten Verschlussmechanismus wird während der gesamten Entsorgungskette ein Zugriff auf die zu entsorgenden, vertraulichen Akten verhindert. Während Akten von jedermann in den Sammelbehälter eingebracht werden können, ist der Zugriff auf den Sammelraum nur befugten Personen erlaubt, welche den elektromagnetischen Verschlussmechanismus öffnen können. Ein Beispiel eines bekannten Sammelbehälters ist in Figur 6 mit jeweils eingefüllten Akten gezeigt.

Die Bewegungen des Sammelbehälters, sowie die Öffnungs- und Entleerungsvorgänge können mit technischen Mitteln mitverfolgt und archiviert werden. Jeder Sammelbehälter ist dazu mit einer Identifizierungsvorrichtung, einem sogenannten TAG, beispielsweise in Form eines RFID TAGs ausgestattet, welcher eindeutig mit einem bestimmten Sammelbehälter in Verbindung gebracht werden kann. Somit kann protokolliert werden, welcher Sammelbehälter wann und wo in welchen Entsorgungscontainer entleert wurde. Aufgrund der eindeutigen Zuweisung der Sammelbehälter zu Kunden, kann eine präzise Protokollierung stattfinden, welche beispielsweise per GPRS an eine zentrale Datenbank drahtlos gesendet werden kann.

Es ist eine Steuereinheit vorgesehen, welche mit dem elektromagnetischen Verschlussmechanismus zusammenwirkt und nach Identifizierung des TAGs, der am Sammelbehälter befestigt ist, und festgestellter Autorisierung die Auswurfklappe zu öffnen vermag. Der elektromagnetische Verschlussmechanismus ist elektronisch codiert und kann nur durch die, die Kodierung kennende Steuereinheit geöffnet werden. Diese Steuereinheit kann am Entsorgungscontainer angebracht oder von einer befugten Person transportiert und betätigt werden.

Der elektromagnetische Verschlussmechanismus ist als Zapfenverschluss ausgebildet und kann kontrolliert unter reproduzierbaren Bedingungen nur durch berechtigte Personen geöffnet werden, wobei die Auswurfklappe verschwenkbar öffenbar ist. Durch Kontaktierung von Elektrokontakten an der Behälterhülle kann der elektromagnetische Verschlussmechanismus von aussen mittels der Steuereinheit betätigt werden.

Aufgrund der speziellen Gestaltung des Sammelraumes mit einer geneigten Bodenplatte werden die eingeworfenen Akten parallel zur geneigten Bodenplatte des Sammelraumes ausgerichtet gestapelt, was in Figur 6 angedeutet ist. Durch die Gestaltung der geneigten Bodenplatte rutschen die im Sammelraum gesammelten Akten nach Öffnung der Auswurfklappe aufgrund der Schwerkraft aus dem Sammelbehälter automatisch heraus. Ein Kippen des Sammelbehälters ist bei der Entleerung darum nicht notwendig.

Bei der bekannten Lösung gemäss der EP1476376, kann es zu einer Wechselwirkung zwischen den gesammelten Akten und dem Verschlussmechanismus kommen. In einer bekannten Ausführungsform der Sammelbehälter können je nach Papierart bis zu 80 Kilogramm Akten gesammelt werden, bevor die Sammelbehälter entleert werden müssen. Die auf die Auswurfklappe und damit indirekt auf den Zapfenverschluss wirkenden Kräfte können dazu führen, dass sich die Auswurfklappe beim Transport des Sammelbehälters ungewollt ohne Auslösung des elektromagnetischen Verschlussmechanismus öffnet. Dann können vertrauliche Akten aus dem Sammelbehälter herausrutschen und die lückenlose Kontrolle der Akten ist nicht mehr gewährleistet.

Um diese ungewollte Öffnung zu verhindern, kann der Druck auf die Auswurfklappe und den elektromagnetischen Verschlussmechanismus verringert werden, indem beispielsweise die geneigte Bodenplatte weniger steil ausgestaltet wird. Nachteilig ist dann aber dass die Entnahme der gesammelten Akten erschwert ist, da die Akten nicht mehr durch die Schwerkraft aus dem Sammelraum herausrutschen.

Eine weitere Möglichkeit besteht in der Gestaltung einer Auswurfklappe mit geringerer Angriffsfläche für die Druckkräfte der schräg aufliegenden Akten. Aber auch dabei wird das Herausrutschen der Akten erschwert, indem die Akten teilweise an den Seitenwänden der Behälterhülle verhaken. Dieser Ansatz führt damit nur zu minderwertigen Entleerungsergebnissen.

Um das ungewollte Öffnen des Zapfenverschlusses und damit des Sammelbehälters zu vermeiden wurde bereits versucht den Zapfen des Zapfenverschlusses mechanisch zu verstärken. Da dieser Zapfen mit einem Elektromagneten elektromagnetisch zusammenwirkt, musste daraufhin auch ein leistungsfähigerer Elektromagnet benutzt werden, der den verstärkten und damit schwereren Zapfen betätigen kann, damit der Verschluss auch wunschgemäss geöffnet werden kann. Zur Betätigung des leistungsfähigeren Elektromagneten muss entsprechend auch eine höhere Leistung eingebracht werden, damit der Elektromagnet den Zapfenverschluss betätigen kann. Damit musste auch die Leistungsabgabe der Steuerungseinheit verändert werden, damit der elektromagnetische Verschlussmechanismus die Auswurfklappe freigeben kann. Dieser Ansatz ist extrem aufwändig und damit nachteilig und führte dazu, dass sich der Zapfenverschluss nicht mehr ungewollt öffnet, aber auch nicht mehr reproduzierbar öffnen lässt, sobald die Magnetkraft nicht exakt den Sollwert erreicht.

### Darstellung der Erfindung

Die vorliegende Erfindung hat sich zur Aufgabe gestellt einen Sammelbehälter, welcher in einem kontrollierten Entsorgungssystem einsetzbar ist, derart weiterzuentwickeln, dass ein ungewolltes Öffnen des elektromagnetischen Verschlussmechanismus und damit der Auswurfklappe beim Transport des mit Akten beladenen Sammelbehälters verhindert wird.

Zur Lösung der Aufgabe wird ein Sammelbehälter gemäss Patentanspruch 1 mit einer Transportsicherung vorgeschlagen, umfassend einfache technische Mitteln bei Verwendung von nur wenigen Bauteilen.

Durch die Transportsicherung wird erreicht, dass auf kostenintensive Umbauten des Verschlussmechanismus, die Verwendung eines stärkeren Elektromagneten sowie der Betrieb des Verschlussmechanismus bzw. des Elektromagneten mit höherer Leistung verzichtet werden kann.

Dabei muss ein Benutzer bzw. die Vorrichtung, welche den elektromagnetischen Verschlussmechanismus nach einer Autorisierung auslöst, zusätzlich die Transportsicherung mechanisch von ausserhalb des Sammelbehälters bedienen und die Auswurfklappe einfach gezielt freigeben. Damit ist eine zweite Verriegelungsstufe erreicht, welche den einfachen Zugang zu vertraulichen Dokumenten zusätzlich verhindert.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1a: zeigt eine Schnittansicht eines Sammelbehälters während
- Figur 1b: eine perspektivische Detailansicht des elektromagnetischen Verschlussmechanismus in Verriegelungsposition mit weggelassener Transportsicherung mit Blick in Richtung der Auswurfklappe zeigt.
- Figur 2: zeigt eine perspektivische Ansicht auf den elektromagnetischen Verschlussmechanismus in Verriegelungsposition, wobei der Zapfen mit der Haltevorrichtung der Auswurfklappe zusammenwirkt.
- Figur 3: zeigt eine Aufsicht auf die Transportsicherung, wobei der elektromagnetische Verschlussmechanismus in Verriegelungsposition ist.
- Figur 4a: zeigt eine perspektivische Ansicht der Transportsicherung in Halteposition mit angedeuteter Haltevorrichtung, während
- Figur 4b: eine Seitenansicht der Transportsicherung gemäss Figur 4a in Halteposition und
- Figur 4c: eine Seitenansicht der Transportsicherung gemäss Figur 4a in Freistellposition zeigt.
- Figur 5: zeigt eine Seitenansicht des elektromagnetischen Verschlussmechanismus in Verriegelungsposition und der Transportsicherung in Halteposition, wobei die Bewegungsmöglichkeit der Transportsicherung mit einem Pfeil angedeutet ist.
- Figur 6: zeigt den bekannten Stand der Technik eines Sammelbehälters mit geschlossener und geöffneter Auswurfklappe in einer Schnittansicht.

### Beschreibung

Im Folgenden wird ein Sammelbehälter 1 beschrieben, welcher zur Verwendung eines Aktenentsorgungssystems wie in der Beschreibungseinleitung offenbart, einsetzbar ist. Das Aktenentsorgungssystem stellt ein geschlossenes System dar, welches nach Einwurf zu entsorgender Akten in den Sammelbehälter 1 den Zugang zu den Akten durch Unbefugte verhindert. Der Inhalt des Sammelbehälters 1 wird in einen Entsorgungscontainer entleert und der gesammelte Inhalt des Entsorgungscontainers anschliessend geschreddert, wobei der Zugang zu den zu entsorgenden Akten zu jeder Zeit unterbunden ist.

Der Sammelbehälter 1 umfasst eine Behälterhülle 10 bestehend aus einer Behälterbodenwand 100 und anderen Behälterwänden, die einen Sammelraum 11 umschliessen, in welchem Akten gesammelt werden können. Der Sammelbehälter 1 weist eine Einfüllseite für Akten mit einem Einwurf 12 auf. Der Einwurf 12 ist mit einem Einwurfscharnier 120 ausgestaltet und dadurch schwenkbar gestaltet. Eine Schikane innerhalb des Sammelraumes 11 im Bereich des Einwurfes 12 verhindert, dass Unbefugte eingeworfene Akten durch den Einwurf 12 dem Sammelbehälter unerlaubt entnehmen können.

Der Sammelbehälter 1 weist eine dem Boden zugewandte Auswurfseite auf. An einer Behälterwand ist eine Auswurfklappe 111 angeordnet, welche an einem Auswurfklappenscharnier 112 schwenkbar um eine Schwenkachse gelagert ist. Im aufgeschwenkten Zustand der Auswurfklappe 111 können gesammelte Akten aus dem Sammelraum 11 abgeführt werden. Um die Entnahme von Akten aus dem Sammelraum 11 zu erleichtern ist der Sammelraum 11 mit einer geneigten Bodenplatte 110 ausgestattet. Auf dieser geneigten Bodenplatte 110, die rampenartig ausgestaltet ist, werden eingeführte Akten in einer schrägen Ausrichtung gelagert. Bei geöffneter Auswurfklappe und vertikaler Ausrichtung des Sammelbehälters 1 rutschen die Akten ohne weiteres aus dem Sammelraum heraus.

Um den Sammelbehälter 1 einfach transportieren zu können sind an der Unterseite Räder 2 und an der Einfüllseite ein Handlauf 3 angeordnet. Damit kann der Sammelbehälter 1 von einer Sammelposition zu dem Entsorgungscontainer bewegt werden, wobei der Entsorgungscontainer die gesammelten Akten des Sammelbehälters 1 übernimmt.

Jeder Sammelbehälter 1 ist mit einer Identifizierungsvorrichtung, einem Datenträger oder sogenannten TAG 102, beispielsweise in Form eines RFID TAGs ausgestattet, welcher eindeutig mit einem bestimmten Sammelbehälter 1 in Verbindung gebracht werden kann. Durch den Datenträger 102 können alle Bewegungen und Öffnungsvorgänge protokolliert und gespeichert und später ausgelesen werden.

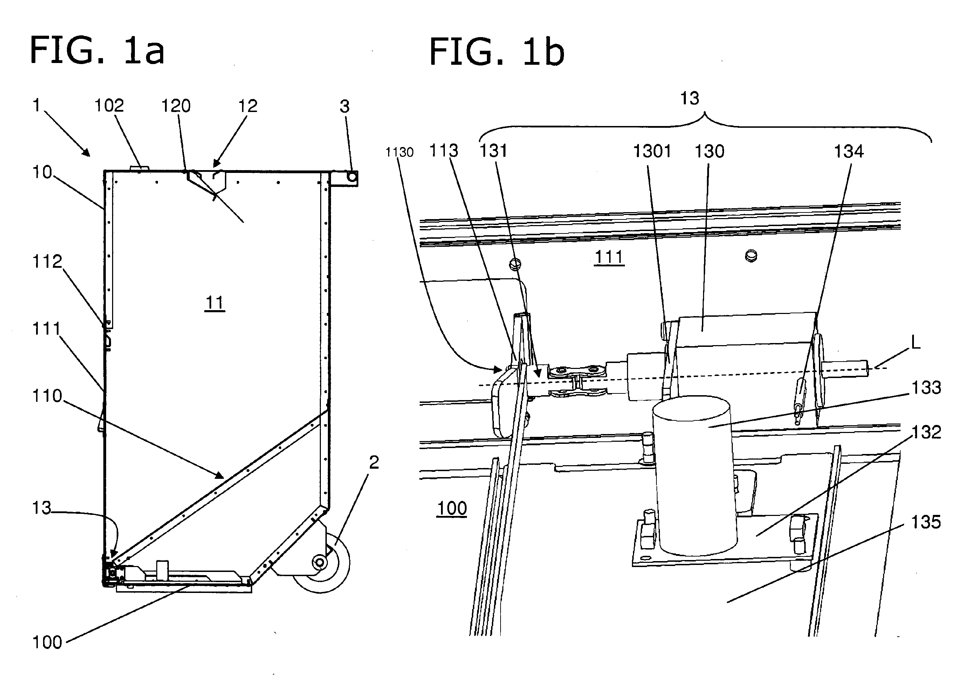

Damit nach erfolgtem Einwurf nur noch befugte Personen Zugang zu den zu entsorgenden Akten haben, ist ein gesicherter elektromagnetisch betätigbarer Verschlussmechanismus 13 unterhalb der geneigten Bodenplatte 110 angeordnet. Der elektromagnetische Verschlussmechanismus 13 ist mit einer Haltevorrichtung 113 (wie in Figur 1b gezeigt) der Auswurfklappe 111 wirkverbindbar und im Bereich der Auswurfseite angeordnet.

Der elektromagnetisch betätigbare Verschlussmechanismus 13 umfasst einen Elektromagneten 130, einen Zapfen 131 und eine interne Steuereinheit 132. Dieser elektromagnetische Verschlussmechanismus 13 ist an der Innenfläche der Behälterbodenwand 100 befestigt. Hier ist der elektromagnetische Verschlussmechanismus 13 beispielsweise auf einem Montageblech 135 angeordnet, welches wiederum auf der Behälterbodenwand 100 befestigt ist. Der Elektromagnet 130 ist mit einem Magnethalter 1301 auf dem Montageblech 135 befestigt.

An der Behälterhülle 10 sind nicht gezeigte Elektrokontakte angeordnet, welche zur internen Steuereinheit 132 führen. Eine externe Öffnungselektronik kann über die ausserhalb der Behälterhülle angeordneten Elektrokontakte an die interne Steuereinheit 132 angeschlossen werden. Durch die interne Steuereinheit 132 ist der Elektromagnet 130 über elektrische Zuleitungen 134 antreibbar. Der Entladestrom eines aufgeladenen Kondensators 133 wird hier zum Betrieb des Elektromagneten 130 verwendet.

Der Elektromagnet 130 ist mit dem Zapfen 131 derart wirkverbunden, dass der Zapfen 131 etwa parallel zur Behälterbodenwand 100 in Richtung der Zapfenlängsachse L in Richtung eines Durchgangsloches 1130 der Haltevorrichtung 113 bewegbar ist. Der Zapfen 131 ist dabei mindestens teilweise durch das Durchgangsloch 1130 der Haltevorrichtung 113 durchführbar. Im geschlossenen Zustand der Auswurfklappe 111 ragt der Zapfen 131 durch das Durchgangsloch 1130 vollständig hindurch. In dieser Verriegelungsposition des elektromagnetischen Verschlussmechanismus 13 ist die Auswurfklappe 111 durch den Verschlussmechanismus 13 im Bereich der Behälterbodenwand 100 lösbar gesichert befestigt ist.

Zum Öffnen der Auswurfklappe 111 muss der elektromagnetische Verschlussmechanismus 13 in die Entriegelungsposition gebracht werden. Dazu muss die externe Steuereinheit über die Elektrokontakte an die interne Steuereinheit 132 angeschlossen werden. Die interne Steuereinheit 132 ist mit einer elektronischen Kodierung versehen, welche den elektromagnetischen Verschlussmechanismus nur öffnet, wenn die externe Steuereinheit die korrekte elektronische Dekodierung zur Öffnung des jeweiligen Sammelbehälters 1 kennt. Sobald die Dekodierung stattgefunden hat, wird der Kondensator 133 aufgeladen. Durch die Entladung des Kondensators 133 über die elektrischen Zuleitungen 134 wird der Elektromagnet 130 betätigt, welcher den Zapfen 131 in Richtung der Zapfenlängsachse L aus dem Durchgangsloch 1130 der Haltevorrichtung 113 herauszieht, wodurch die Auswurfklappe 111 freigegeben wird. Die Entleerung findet dann aufgrund der Schwerkraft automatisch statt. Nach der Entleerung kann die Auswurfklappe 111 wieder zugedrückt werden, wobei der, wieder in der Verriegelungsposition befindliche Zapfen 131 in das Durchgangsloch 1130 der ösenförmig ausgestalteten Haltevorrichtung 113 gleitet. Somit ist die Auswurfklappe 111 des Sammelbehälters 1 wieder verschlossen und der elektromagnetische Verschlussmechanismus wieder in der Verriegelungsposition.

Da bei befülltem Sammelbehälter 1 durch die Lagerung der Akten auf der geneigten Bodenplatte 110 ein hoher Druck auf die grossflächig ausgeführte Auswurfklappe 111 wirkt, wirken entsprechend grosse Kräfte auf den Zapfen 131 des elektromagnetischen Verschlussmechanismus 13. Damit der Zapfen 131 gut in das Durchgangsloch 1130 der Haltevorrichtung 113 beim Verriegeln gleiten kann, ist der Zapfen 131 mehrteilig und teilweise flexibel ausgestaltet.

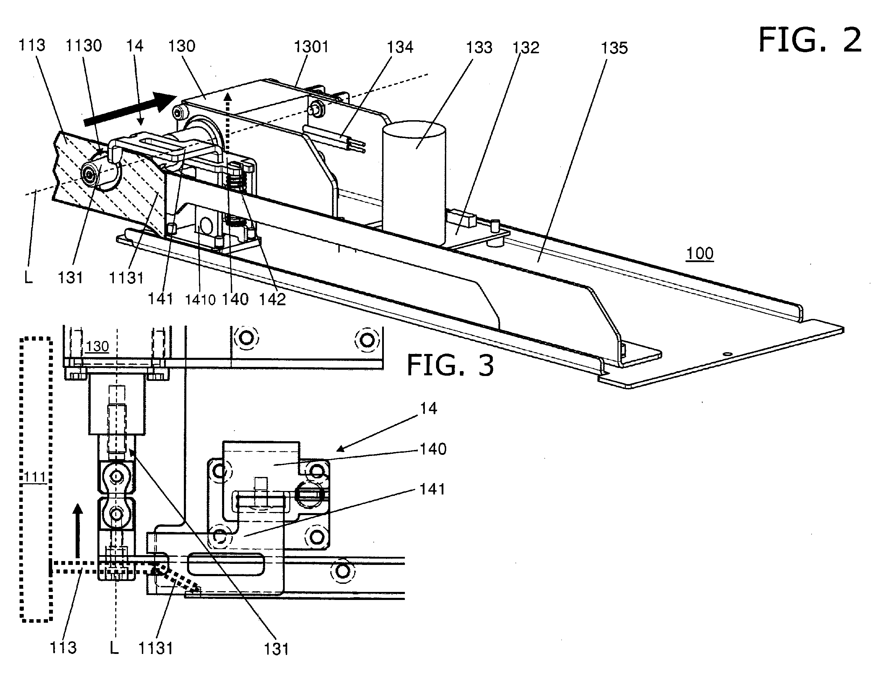

In Figur 2 ist der elektromagnetische Verschlussmechanismus 13 mit einer im Bereich des Zapfens 131 angeordneten mehrteiligen Transportsicherung 14 dargestellt. Die Transportsicherung 14 ist in einer Ebene senkrecht zur Zapfenlängsachse L von einer Halteposition, wie in Figur 2 dargestellt in eine Freistellposition bringbar. Diese Bewegungsmöglichkeit ist durch den gestrichelt dargestellten Pfeil angedeutet.

Die Transportsicherung 14 umfasst ein fest indirekt oder direkt auf der Behälterbodenwand 100 befestigtes Halteprofil 140. In diesem Halteprofil 140 ist eine Transporthalterung 141 bewegbar angeordnet gelagert. Die lineare Bewegbarkeit des Halteprofils 140 erfolgt gegen eine Feder 142. Die Feder 142 ist als Druckfeder 142 ausgeführt und zwingt die Transporthalterung 141 aufgrund der Federkraft in die Halteposition. Die Transporthalterung 141 weist einen Steg 1410 auf. Die Transporthalterung 141 ist derart gelagert, dass der Steg 1410 bei Stellung der Transportsicherung 14 in Halteposition, aus der Behälterhülle 10, insbesondere aus der Behälterbodenwand 100 herausragt.

Die Transporthalterung 141 ist gegabelt ausgestaltet und verhindert in der Halteposition bei eingeführter Haltevorrichtung 113 eine Bewegung der Haltevorrichtung 113 in Richtung der Zapfenlängsachse L. Die Haltevorrichtung 113 ist von der Transporthalterung 141 teilweise umschlossen gehalten, wobei der Zapfen 131 und der gesamte elektromagnetische Verschlussmechanismus 13 uneingeschränkt betreibbar ist.

In Figur 3 ist erkennbar, dass ein Teil der Haltevorrichtung 113 in die gegabelt ausgestaltete Transporthalterung 141 eingeführt ist. Die Haltervorrichtung 113 kann in dieser Ausgestaltung nicht in Richtung weg vom Elektromagneten 130 gleiten, somit ist ein ungewolltes Hinausfädeln des Zapfens 131 aus dem Durchgangsloch 1130 in der Halteposition der Transportsicherung 14 ausgeschlossen.

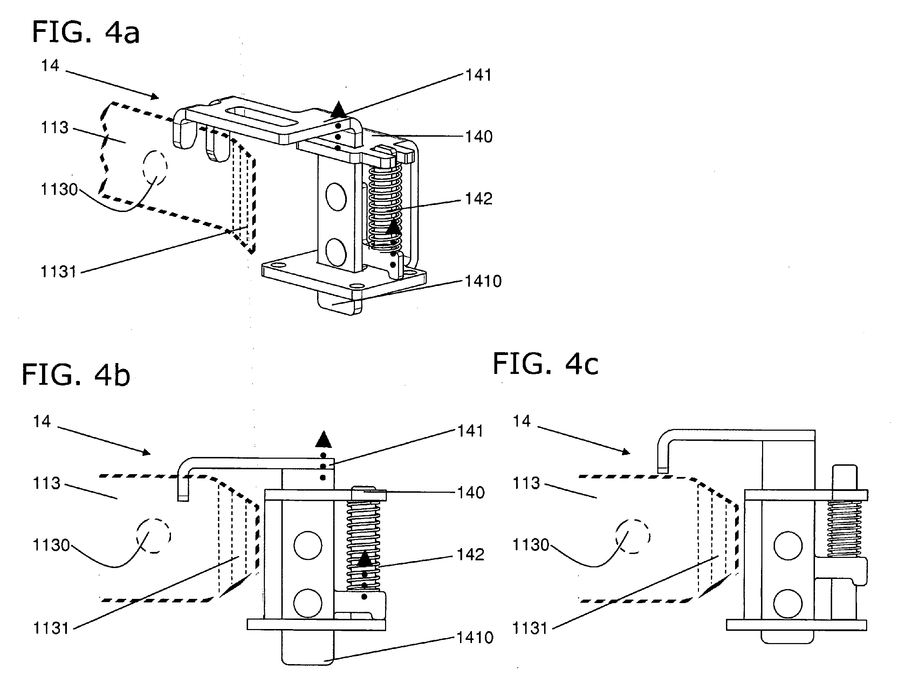

Die perspektivische Ansicht Figur 4a zeigt eine angedeutete Haltevorrichtung 113 mit einem gebogenen Abschnitt 1131. Um ein Herausrutschen der Haltevorrichtung 113 aus der gegabelten Transporthalterung 141 zusätzlich zu erschweren, sorgt der gebogene Abschnitt 1131. Dieser verhindert auch das ungewollte Aufklappen der Auswurfklappe 111.

Der Steg 143 ist an der Transporthalterung 141 befestigt oder kann in diese angeformt sein. Zwischen einem Vorsprung der Transporthalterung 141 und dem Halteprofil 140 ist die Feder 142 einspannbar gelagert. In der Halteposition der Transportsicherung 14, wie in Figur 4b gezeigt, drückt die Feder 142 die Transporthalterung 141 über die Haltevorrichtung 113, wodurch diese eingeklemmt ist.

Der Steg 1410 ist so durch die Behälterbodenwand 100 hindurchragend ausgebildet, dass beim Drücken in eine Richtung senkrecht zur Zapfenlängsachse L die Transporthalterung 141 gegen die Feder 142 in Pfeilrichtung gedrückt wird und die Transporthalterung 141 bzw. die Transportsicherung 14 in Freistellposition bringbar ist. Die Transporthalterung 141 gibt dabei die Haltevorrichtung 113 frei.

Um also die Auswurfklappe 111 zu öffnen, muss neben der Betätigung des elektromagnetischen Verschlussmechanismus 13 der Steg 1410 von ausserhalb der Behälterhülle 10 des Sammelbehälters 1 linear in die Behälterhülle 10 hineinbewegt werden. Wenn die Dekodierung der externen Steuereinheit korrekt ist, kann durch manuelle Bewegung der Transporthalterung 141 senkrecht zur Zapfenlängsachse L die Haltevorrichtung 113 und damit die Auswurfklappe 111 zur Öffnung freigegeben werden. Neben einer rein mechanischen Entriegelung der Transportsicherung 14 kann die Transporthalterung 141 auch elektromagnetisch entriegelbar ausgestaltet sein.

Die Transportsicherung 14 ist damit unabhängig vom elektromagnetischen Verschlussmechanismus 13 angeordnet und betätigbar.

Wie oben erläutert kann es nützlich sein, die Haltevorrichtung 113 mit dem gebogenen Abschnitt 1130 auszustatten, dies ist aber nicht unbedingt zwingend. Auch die Ausgestaltung einer gegabelten Transporthalterung 141 ist nicht unbedingt zwingend. Da ein ungewünschtes Ausfädeln des Zapfens 131 aus dem Durchgangsloch 1130 in vom Elektromagneten 130 entgegen gesetzte Richtung verhindert werden soll, würde ein Vorsprung an der Transporthalterung 141 auf der dem Elektromagneten 130 abgewandten Seite der Transporthalterung 141 ausreichen.

Die Transportsicherung 14 nimmt die Druckkräfte bei befülltem Sammelraum 11 und geschlossener Auswurfklappe 111 auf die Auswurfklappe 111 vollständig auf. Der elektromagnetische Verschlussmechanismus 13 wird damit nicht belastet und geschont. Wenn die Auswurfklappe 111 geöffnet werden soll, dann muss ein Benutzer die Transportsicherung 14 betätigen. Ein ungewolltes Öffnen der Auswurfklappe 111 kann damit verhindert werden.

### Bezugszeichenliste

- 1: Sammelbehälter
- 2: Rad
- 3: Handlauf
- 10: Behälterhülle
100 Behälterbodenwand
102 Datenträger (TAG)
- 11: Sammelraum
110 geneigte Bodenplatte
111 Auswurfklappe
112 Auswurfklappenscharnier
113 Haltevorrichtung (Klappenöse)
1130 Durchgangsloch
1131 gebogener Abschnitt
- 12: Einwurf
120 Einwurfscharnier
- 13: elektromagnetischer Verschlussmechanismus (Zapfenverschluss)
130 Elektromagnet
1301 Magnethalter
131 Zapfen
132 interne Steuereinheit mit Kodierung
133 Kondensator
134 elektrische Zuleitung
135 Montageblech
L Zapfenlängsachse
- 14: Transportsicherung
140 Halteprofil
141 Transporthalterung (gegabelt)
1410 Steg
142 Feder (Druckfeder)

## Patentansprüche

1. Sammelbehälter (1) eines Aktenentsorgungssystems, umfassend einen Sammelraum (11) mit einer in Entleerungsrichtung geneigt verlaufenden Bodenplatte (110), eine verschwenkbare Auswurfklappe (111) zur Entleerung von Akten aus dem Sammelraum (11) und
einen elektromagnetisch betätigbaren Verschlussmechanismus (13) mit einem Zapfen (131), welcher mit einer an der Auswurfklappe (111) angeordneten Haltevorrichtung (113) wirkverbindbar ist,
**dadurch gekennzeichnet, dass**
eine Transportsicherung (14) mit der Haltevorrichtung (113) der Auswurfklappe (111) wirkverbindbar ist, wobei die Transportsicherung (14) die Druckkräfte bei befülltem Sammelraum (11) und geschlossener Auswurfklappe (111) auf die Auswurfklappe (111) vollständig aufnimmt und damit vom elektromagnetisch betätigbaren Verschlussmechanismus (13) entlastet
und die Transportsicherung (14) mindestens teilweise aus der Behälterhülle (10) herausragt und somit zusätzlich zur elektromagnetischen Entriegelung des Zapfens (131) aus der Haltevorrichtung (113) von aussen mechanisch entriegelbar ist, wodurch die Auswurfklappe (111) erst freigebbar ist.

2. Sammelbehälter nach Anspruch 1, **wobei** die Transportsicherung (14) ein an der Behälterbodenwand (100) befestigtes Halteprofil (140) und einen im Halteprofil (140) gegen eine Feder (142) bewegbaren Klammeraufbau (141) aufweist.

3. Sammelbehälter nach Anspruch 1, **wobei** der Klammeraufbau (141) mindestens teilweise aus der Behälterhülle (10) herausragt.

4. Sammelbehälter nach Anspruch 2, **wobei** die Feder (142) eine Druckfeder (142) ist.

5. Sammelbehälter nach Anspruch 2, **wobei** der Klammeraufbau (141) in einer Richtung senkrecht zur Zapfenlängsachse (L) bewegbar angeordnet ist.

6. Sammelbehälter nach Anspruch 2, **wobei** der Klammeraufbau (141) einen Steg (143) aufweist, welcher mindestens teilweise durch die Behälterbodenwand (100) ragt und eine Verschiebung des Klammeraufbaus (141) von ausserhalb des Sammelraumes (11) erlaubt.

7. Sammelbehälter nach einem der vorhergehenden Ansprüche, **wobei** die Haltevorrichtung (113) der Auswurfklappe (111) ein Durchgangsloch (1130) und einen gebogenen Abschnitt (1131) aufweist.

8. Sammelbehälter nach einem der vorhergehenden Ansprüche, **wobei** der elektromagnetische Verschlussmechanismus (13) und das Halteprofil (140) unlösbar auf der Behälterbodenwand (100) innerhalb des Sammelbehälters (1) befestigt sind.

9. Sammelbehälter nach einem der vorhergehenden Ansprüche, **wobei** der Klammeraufbau (141) der Transportsicherung (14) rein mechanisch oder elektromagnetisch entriegelbar ist.

## Claims

1. Collection container (1) of a document disposal system, comprising a collection chamber (11) having a base plate (110) extending in an inclined manner in an emptying direction, a pivotable ejection flap (111) for emptying documents from the collection chamber (11) and
an electromagnetically actuatable closure mechanism (13) with a pin (131) which is able to be operatively connected to a retaining device (113) arranged on the ejection flap (111),
**characterised in that**
a transport securing device (14) is able to be operatively connected to the retaining device (113) of the ejection flap (111), the transport securing device (14) entirely absorbing the compressive forces on the ejection flap (111), when the collection chamber (11) is full and the ejection flap (111) is closed, and thereby relieving the electromagnetically actuatable closure mechanism (13) of said forces
and the transport securing device (14) protrudes at least partially from the container cover (10) and thus is able to be mechanically unlocked from outside, in addition to the electromagnetic unlocking of the pin (131) from the retaining device (113), whereby the ejection flap (111) is only then able to be released.

2. Collection container according to Claim 1, the transport securing device (14) comprising a retaining profile (140) fastened to the container base wall (100) and a clamping structure (141) which is able to be moved in the retaining profile (140) against a spring (142).

3. Collection container according to Claim 1, the clamping structure (141) protruding at least partially from the container cover (10).

4. Collection container according to Claim 2, the spring (142) being a compression spring (142).

5. Collection container according to Claim 2, the clamping structure (141) being movably arranged in a direction perpendicular to the longitudinal axis of the pin (L).

6. Collection container according to Claim 2, the clamping structure (141) comprising a projection (143), which protrudes at least partially through the container base wall (100) and permits a displacement of the clamping structure (141) from outside the collection chamber (11).

7. Collection container according to one of the preceding claims, the retaining device (113) of the ejection flap (111) comprising a through-hole (1130) and a curved portion (1131).

8. Collection container according to one of the preceding claims, the electromagnetic closure mechanism (13) and the retaining profile (140) being unreleasably fastened to the container base wall (100) inside the collection container (1).

9. Collection container according to one of the preceding claims, the clamping structure (141) of the transport securing device (14) being able to be unlocked purely mechanically or electromagnetically.

## Revendications

1. Récipient collecteur (1) d'un système de destruction de documents comprenant un espace de collecte (11) avec une plaque de fond (110) inclinée dans le sens de vidage, un volet d'éjection (111) basculable pour vider des documents de l'espace de collecte (11) et un mécanisme de fermeture à actionnement électromagnétique (13) comprenant une broche (131) qui peut être reliée de façon active à un dispositif de retenue (113) disposé sur le volet d'éjection (111),
**caractérisé en ce qu'**une protection de transport (14) peut être reliée de façon active à un dispositif de retenue (113) du volet d'éjection (111), sachant que la protection de transport (14) absorbe complètement les forces de pression sur le volet d'éjection (111) lorsque l'espace de collecte (11) est rempli et que le volet d'éjection (111) est fermé et est ainsi déchargée par le mécanisme de fermeture à actionnement électromagnétique (13)
et que la protection de transport (14) fait saillie au moins partiellement de l'enveloppe du récipient (10) et peut ainsi être en plus déverrouillée du dispositif de retenue (113) mécaniquement depuis l'extérieur pour le déverrouillage électromagnétique de la broche (131), le volet d'éjection (111) pouvant être libéré à ce moment-là seulement.

2. Récipient collecteur selon la revendication 1, dans lequel la protection de transport (14) présente un profilé de retenue (140) fixé sur la paroi du fond du récipient (100) et un montage de fixation (141) mobile contre un ressort (142) dans le profilé de retenue (140).

3. Récipient collecteur selon la revendication 1, dans lequel le montage de fixation (141) fait saillie au moins partiellement de l'enveloppe du récipient (10).

4. Récipient collecteur selon la revendication 2, dans lequel le ressort (142) est un ressort à pression (142).

5. Récipient collecteur selon la revendication 2, dans lequel le montage de fixation (141) est disposé mobile dans une direction perpendiculaire à l'axe longitudinal de la broche (L).

6. Récipient collecteur selon la revendication 2, dans lequel le montage de fixation (141) présente une branche (143) qui fait saillie au moins partiellement à travers la paroi du fond du récipient (100) et permet de pousser le montage de fixation (141) en-dehors de l'espace de collecte (11).

7. Récipient collecteur selon l'une des revendications précédentes, dans lequel le dispositif de retenue (113) du volet d'éjection (111) présente un trou traversant (1130) et un tronçon coudé (1131).

8. Récipient collecteur selon l'une des revendications précédentes, dans lequel le mécanisme de fermeture à actionnement électromagnétique (13) et le profilé de retenue (140) sont fixés de manière non séparable sur la paroi du fond du récipient (100) à l'intérieur du récipient collecteur (1).

9. Récipient collecteur selon l'une des revendications précédentes, dans lequel le montage de fixation (141) de la protection de transport (14) peut être déverrouillé de façon purement mécanique ou bien électromagnétique.
